## Europäisches Patentamt

## European Patent Office

## Office européen des brevets

(11) Veröffentlichungsnummer: **0 057 929**
**B1**

(12) # EUROPÄISCHE PATENTSCHRIFT

(45) Veröffentlichungstag der Patentschrift:
16.05.84

(51) Int. Cl.³: **C 01 G 19/08**

(21) Anmeldenummer: **82100884.4**

(22) Anmeldetag: **08.02.82**

(54) Verfahren zur Herstellung von Zinn-(IV)-chlorid.

(30) Priorität: **11.02.81 DE 3104737**

(43) Veröffentlichungstag der Anmeldung:
**18.08.82 Patentblatt 82/33**

(45) Bekanntmachung des Hinweises auf die Patenterteilung:
**16.05.84 Patentblatt 84/20**

(84) Benannte Vertragsstaaten:
**BE CH DE FR GB IT LI NL**

(56) Entgegenhaltungen:
**DE - A - 2 417 078**
**US - A - 1 897 360**
**US - A - 2 047 545**
**US - A - 2 061 816**

(73) Patentinhaber: **HOECHST AKTIENGESELLSCHAFT,**
**Postfach 80 03 20, D-6230 Frankfurt am Main 80 (DE)**

(72) Erfinder: **Schmidt, Werner, Dr., Hoher Göllweg 4,**
**D-8261 Burgkirchen/Alz (DE)**
Erfinder: **Scholz, Harald, Bruckner Strasse 29,**
**D-8263 Burghausen/Salzach (DE)**
Erfinder: **Niedzielski, Nikolaus, Bruckner Strasse 25,**
**D-8263 Burghausen/Salzach (DE)**

## Verfahren zur Herstellung von Zinn-(IV)-chlorid

Gegenstand der Erfindung ist ein Verfahren zur Herstellung von Zinn-(IV)-chlorid entsprechend Patentanspruch 1.

Zinn-(IV)-chlorid ist schon lange bekannt. Es wird meistens aus metallischem Zinn und Chlor hergestellt. Für diese direkte Erzeugung aus den Elementen sind eine Reihe von Verfahren bekannt, bei denen beispielsweise gasförmiges Chlor in geschmolzenes Zinn eingeleitet und das gasförmig entweichende Zinn-(IV)-chlorid fraktioniert kondensiert wird. Ein anderes Verfahren beschreibt die Versprühung von geschmolzenem Zinn in einer Chlorgas-Atmosphäre und anschließende Kondensation des gebildeten Zinn-(IV)-chlorids. Bei einem weiteren bekannten Verfahren wird Chlorgas zunächst von unten nach oben durch geschmolzenes Zinn geleitet, das dabei entstandene Gemisch von Chlor und gasförmigem Zinn-(IV)-chlorid anschließend über die Oberflächen von weiterem geschmolzenem Zinn geleitet und danach das gebildete Zinn-(IV)-chlorid aus dem Gasgemisch durch Kondensation abgetrennt.

Der Nachteil dieser Verfahren ist, daß durch die hohe Bildungswärme des Zinn-(IV)-chlorids die Reaktion schwer beherrschbar ist, das metallische Zinn kann bis zum Glühen erhitzt werden beziehungsweise unter Feuererscheinung reagieren. Das stürmisch gasförmig entweichende Zinn-(IV)-chlorid, gegebenenfalls in Mischung mit nichtumgesetztem Chlorgas, kann Zinnpartikel mitreißen, was zu Schwierigkeiten führen kann.

Ein weiteres Problem stellt die Bildung von Zinn-(II)-chlorid dar. Zu deren Verminderung ist es bekannt, dem geschmolzenen Zinn mindestens 5 Gew.-% Antimon als Katalysator zuzusetzen. Es kann auch Antimon-(V)-chlorid zugegeben werden. Dies hat wiederum den Nachteil, daß das zugegebene oder gebildete Antimon-(V)-chlorid ebenfalls flüchtig ist und sich dabei zersetzt, wodurch die Notwendigkeit entsteht, das gebildete Zinn-(IV)-chlorid vom Antimon-(V)-chlorid beziehungsweise seinen Zersetzungsprodukten zu trennen. Alle bisher genannten Verfahren benötigen spezielle Vorrichtungen zur Kondensation und Fraktionierung des gasförmig aus dem Reaktionsraum entweichenden Zinn-(IV)-chlorids.

Es ist ferner ein Verfahren bekannt, bei dem festes Zinn in Blockform mit Chlor so umgesetzt wird, daß die Reaktionswärme das Zinn zum Schmelzen bringt. Das geschmolzene Zinn tropft in flüssiges, gekühltes Zinn-(IV)-chlorid und erstarrt. In das Zinn-(IV)-chlorid wird von unten zusätzlich Chlor eingeleitet, welches mit dem erstarrten Zinn unter Bildung von weiterem Zinn-(IV)-chlorid reagiert. Das Schmelzen des Zinns durch die Reaktion mit Chlor kann dadurch reguliert werden, daß das durch die Reaktion entstandene gasförmige Zinn-(IV)-chlorid in einem Rückflußkühler so kondensiert wird, daß es flüssig auf die Schmelzzone des Zinns zurücktropft während unkondensierte Gase von unten her in die Schmelzzone des Zinns zurückgeleitet werden.

Der Nachteil dieses Verfahrens ist die schwierige Beherrschbarkeit der Schmelzzone. Die Zinnblöcke können leicht zusammensintern und einen Block bilden, der nur noch an der Oberfläche mit Chlor reagiert und schmilzt, wodurch ein Abtropfen des geschmolzenen Zinns in das flüssige Zinn-(IV)-chlorid nicht mehr gewährleistet ist. Ferner sind bei diesem Verfahren wie auch allen weiter oben beschrieben, bei denen metallisches Zinn mit Chlor unter Schmelzen umgesetzt wird, aufwendige Werkstoffe notwendig, die bei der gegebenen hohen Temperatur gegen Chlorgas beständig sind. Insgesamt wird eine relativ komplizierte, kostspielige Apparatur benutzt.

In der US-PS 1 897 360 wird ein diskontinuierliches Verfahren beschrieben, bei dem festes metallisches Zinn in Blöcken in flüssigem Zinn-(IV)-chlorid mit Chlor umgesetzt wird. Das Chlor wird unten in die Mischung von Zinn und Zinn-(IV)-chlorid in einer Menge eingeleitet, die nicht vollständig mit dem Zinn reagiert. Das beim ersten Durchgang nicht verbrauchte Chlor sammelt sich im Oberteil des Behälters, wird von dort abgezogen, gekühlt und zusammen mit neuem Chlor unten in den Behälter wieder eingeleitet. Ein Teil des flüssigen Zinn-(IV)-chlorids wird aus dem Reaktionsraum abgezogen, ebenfalls gekühlt und in den Reaktionsraum wieder eingeleitet. Während der Reaktion kommt die Flüssigkeit zum Sieden, die Zinn-(IV)-chlorid-Dämpfe werden zusammen mit dem überschüssigen Chlorgas gekühlt und zurückgeführt. Die Zinnfüllung soll immer vollständig von Zinn-(IV)-chlorid bedeckt sein, offensichtlich, um eine unkontrollierte Reaktion des metallischen Zinns mit dem im Gasraum vorhandenen überschüssigen Chlor zu vermeiden. Das erzeugte Zinn-(IV)-chlorid wird unten aus dem Reaktionsraum abgezogen. Die Reaktion so durchzuführen, daß alles Chlor im Zinn-(IV)-chlorid gelöst mit dem metallischen Zinn reagiert, wobei sich demnach kein überschüssiges Chlor im Gasraum über dem Zinn-(IV)-chlorid sammelt und im Kreis geführt wird, soll angeblich wirtschaftlich impraktikabel sein.

Bei dem zuletzt und bei dem davorstehend beschriebenen Verfahren enthält das erzeugte Zinn-(IV)-chlorid in der Regel noch beträchtliche Mengen gelöstes Chlor. Über eine Reinigung des Zinn-(IV)-chlorids ist in beiden Fällen nichts ausgesagt.

Alle bis jetzt erwähnten Verfahren sind bereits seit über 40 Jahren bekannt. In neuerer Zeit wurde in der DE-OS 2 417 078 ein Verfahren beschrieben, bei dem wiederum Chlor in flüssiges Zinn eingeleitet wird und zur Abführung der entstehenden Reaktionswärme gleichzeitig Zinn-(IV)-chlorid, vorteilhaft etwa das Siebenfache der Menge des durch die Chlorierung gebildeten Zinn-(IV)-chlorids. Wie diese neuere Veröffentlichung beweist, ist die Temperaturbeherrschung bei der Umsetzung von Chlor mit geschmolzenem Zinn nach wie vor ein Problem. Im übrigen hat auch das neuere Verfahren die Nachteile, die bei der Umsetzung von Zinn mit Chlor bei hohen Temperaturen auftreten (Bildung von Zinn-(II)-chlorid, Korrosion, vergleichsweise aufwendige fraktionierte Kondensation des gebildeten Zinn-(IV)-chlorids). In der genannten DE-OS werden Verfahren, Zinn in Zinn-(IV)-chlorid bei Temperaturen unter 114°C bei atmosphärischem Druck mit Chlor umzusetzen, als »verhältnismäßig unwirksam« bezeichnet.

Es wurde nun ein Verfahren gefunden, das es gestattet, Zinn-(IV)-chlorid aus Zinn und Chlor kontinuierlich in einer einfachen Apparatur, ohne Korrosionsprobleme und ohne Verwendung einer Kondensations- beziehungsweise Rektifikationsapparatur in guter Reinheit zu erzeugen. Dieses Verfahren zur Herstellung von Zinn-(IV)-chlorid durch Umsetzung von überschüssigem metallischem Zinn mit Chlor in Gegenwart von flüssigem Zinn-(IV)-chlorid bei Temperaturen von 20 bis 90°C, gegebenenfalls unter Druck, wobei man das Chlor in den Reaktionsraum unten einleitet, das gebildete Zinn-(IV)-chlorid oben aus dem Reaktionsraum entnimmt, nach Kühlung in den Reaktionsraum unten wieder einführt und dabei soviel Zinn-(IV)-chlorid abführt, daß die Standhöhe des Zinn-(IV)-chlorids im Reaktionsraum gleichbleibt, ist dadurch gekennzeichnet, daß man je dm³ im Reaktionsraum vorhandenen Zinn-(IV)-chlorids 30 bis 300 Ndm³h⁻¹ Chlor einleitet, den Überschuß des Zinns auf mindestens dem vierfachen Gewicht des je Stunde eingeleiteten Chlorgewichtes hält und je 1 Ndm³h⁻¹ eingeleitetes Chlor 0,08 bis 0,3 dm³h⁻¹ Zinn-(IV)-chlorid im Kreis führt, wobei man das aus dem Kreislauf abgeführte Zinn-(IV)-chlorid in mindestens einem weiteren Reaktionsraum, der mit metallischem Zinn und Zinn-(IV)-chlorid gefüllt ist, ohne Zufuhr von Chlor bei einer Temperatur von 60 bis 100°C und einer mittleren Verweilzeit von 1 bis etwa 7 h behandelt, anschließend filtriert und gegebenenfalls mit absorbierenden Mitteln in Kontakt bringt.

Das metallische Zinn soll möglichst rein sein. Zweckmäßig wird ein Metall verwendet, das 99,8 bis 99,99% Zinn enthält.

Das Metall kann als Granulat, in Blöckchen, Stäbchen oder Barren vorliegen. Die Größe und Gestalt der Zinnstücke ist nicht besonders kritisch. Es wird vorteilhaft eine Gestalt gewählt, die im Reaktionsraum nicht zur Brückenbildung und zum Verkeilen neigt und die im Verhältnis zu ihrem Volumen eine möglichst große Oberfläche aufweist. Es soll gewährleistet sein, daß die Zinnstücke den Reaktionsraum von unten nach oben gleichmäßig füllen.

Die Zinnfüllung kann über die Standhöhe des flüssigen Zinn-(IV)-chlorids im Reaktionsraum hinausragen. Es ist eine Besonderheit des erfindungsgemäßen Verfahrens, daß im Gasraum über dem flüssigen Zinn-(IV)-chlorid relativ wenig Chlor vorhanden ist, das heißt, der Partialdruck des Chlors liegt unter 20% des im Gasraum herrschenden Gesamtdruckes. Dadurch tritt keine stürmische und unkontrollierte Reaktion mit dem metallischen Zinn ein, die beispielsweise zum unerwünschten Sieden des Zinn-(IV)-chlorids an der Oberfläche führen könnte.

Das Chlor wird in der Nähe des Bodens in den Reaktionsraum eingeleitet, wobei man zweckmäßig Vorrichtungen wählt, die ein gleichmäßiges Einströmen des Chlors über den Querschnitt des Reaktionsraumes gewährleisten, beispielsweise Siebplatten, Fritten, gelochte Kugeln. Das Chlor wird im allgemeinen mit Raumtemperatur eingeleitet, eine besondere Kühlung ist nicht erforderlich. Es sollte möglichst frei von anderen Halogenen, insbesondere von Brom, sein.

Als Reaktionsraum wird zweckmäßig ein schlanker zylindrischer Behälter mit senkrecht stehender Achse gewählt, der vorteilhaft ein Verhältnis seiner Höhe zum Durchmesser von 4 bis 20 aufweist. Zur Abführung der Reaktionswärme sollte der Behälter einen Doppelmantel haben, der von einem Kühlmedium, beispielsweise Wasser, durchflossen ist. Einbauten zur Kühlung wie Kühlfinger oder Kühlschlangen sind nicht erforderlich, sondern eher nachteilig, da sie die gleichmäßige Verteilung der Zinnstücke im Reaktionsraum stören können.

Der Reaktionsbehälter enthält zweckmäßig am Boden eine Einlaßöffnung für gasförmiges Chlor und eine zweite Einlaßöffnung für flüssiges Zinn-(IV)-chlorid, darüber einen waagerechten Boden, der für Gas und Flüssigkeit durchlässig, für die daraufliegenden Zinnstücke jedoch undurchlässig ist. Zweckmäßig wird eine perforierte Platte verwendet. Am Kopf des Behälters ist mindestens eine Öffnung zum Zu- und Abführen von Gas, eine weitere Öffnung zum Zuführen der Zinnstücke sowie in einem Abstand darunter, seitlich am Mantel des Behälters, eine Öffnung zum Abführen von flüssigem Zinn-(IV)-chlorid angebracht. Der Abstand zwischen der seitlichen Öffnung im oberen Teil des Behälters und der perforierten Platte im unteren Teil des Behälters sollte möglichst groß sein, das heißt mindestens drei Viertel der Gesamtbehälterhöhe betragen, um eine gute Raum-Zeit-Ausbeute an Zinn(IV)-chlorid zu erreichen.

Während des Betriebes ist der Behälter bis zu der oberen seitlichen Öffnung mit flüssigem Zinn-(IV)-chlorid gefüllt. Aus der genannten Öffnung wird die Flüssigkeit abgezogen, durch eine Kühlvorrichtung, beispielsweise einen Schlangenröhren- oder Plattenwärmeaustauscher, geleitet und über eine Pumpe wiederum unten in den Reaktionsbehälter eingeführt. Aus der im Kreis geführten Flüssigkeit wird soviel Zinn-(IV)-chlorid entnommen, daß die Standhöhe der Flüssigkeit im Reaktionsbehälter etwa gleichbleibt.

Die Temperatur des flüssigen Zinn-(IV)-chlorids im Reaktionsraum wird während der Reaktion auf 20 bis 90°C gehalten. Unterhalb 20°C ist ein unnötig hoher Kühlaufwand erforderlich, außerdem wird auch der Reaktionsverlauf träger. Oberhalb 90°C enthält der Gasraum über dem flüssigen Zinn-(IV)-chlorid höhere Mengen gasförmiges Chlor, das zu Schwierigkeiten infolge zu heftiger Reaktion mit metallischem Zinn, das sich in diesem Gasraum befindet, führen kann, beziehungsweise wenn der Gasraum kein metallisches Zinn enthält, werden unnötig hohe Mengen Chlor abgeführt und erfordern einen zusätzlichen Reinigungsaufwand des Abgases. Letzteres gilt auch für die bei Reaktionstemperaturen oberhalb 90°C im Gasraum vorhandenen Mengen gasförmigen Zinn-(IV)-chlorids. Vorzugsweise wird die Umsetzung des Chlors mit Zinn unter Kreisführung von Zinn-(IV)-chlorid bei 30 bis 80°C durchgeführt.

Das während der Reaktion im Kreis geführte Zinn-(IV)-chlorid wird mittels des oben bereits beschriebenen Wärmeaustauschers auf 10 bis etwa 25°C abgekühlt. Eine Kühlung auf tiefere Temperaturen ist im allgemeinen nicht erforderlich und würde einen unnötig hohen Kühlaufwand erfordern.

Es wurde gefunden, daß das Verfahren zur Herstellung von Zinn-(IV)-chlorid durch Umsetzung von überschüssigem, metallischem Zinn mit Chlor in flüssigem Zinn-(IV)-chlorid unter Kreisführung und Kühlung eines Teils des flüssigen Zinn-(IV)-chlorids, wie es grundsätzlich in der weiter oben bereits erwähnten US-PS 1 897 360 beschrieben ist, trotz gegenteiliger Meinung der Fachwelt und insbesondere der Anmelderin der US-PS 1 897 360 selbst (siehe DE-OS 2 417 078 Seite 2, Zeilen 12 bis 23) mit guter Effektivität durchgeführt werden kann, wenn man je $dm^3$ im Reaktionsraum vorhandenen flüssigen Zinn-(IV)-chlorids 30 bis 300 $Ndm^3h^{-1}$ Chlor in den Reaktionsraum einleitet, den Überschuß des Zinns auf mindestens dem 4fachen Gewicht des je Stunde eingeleiteten Chlorgewichts hält und je 1 $Ndm^3h^{-1}$ eingeleitetes Chlor 0,08 bis 0,3 $dm^3h^{-1}$ flüssiges Zinn-(IV)-chlorid im Kreis führt.

Werden weniger als 30 $Ndm^3h^{-1}$ Chlor je $dm^3$ vorhandenen flüssigen Zinn-(IV)-chlorids eingeleitet, ist die Reaktion von Chlor mit Zinn zwar gut zu beherrschen, es wird aber zu wenig Zinn-(IV)-chlorid gebildet, so daß die Wirtschaftlichkeit des Verfahrens unnötig gering wird. Werden mehr als 300 $Ndm^3h^{-1}$ Chlor je $dm^3$ im Reaktionsraum vorhandenen flüssigen Zinn-(IV)-chlorids eingeleitet, ist die Temperatur im Reaktionsraum nicht mehr ausreichend beherrschbar. Es kann zum Aufsieden des Zinn-(IV)-chlorids kommen sowie zur unnötig hohen Abgabe von gasförmigem Chlor in den Gasraum über dem Zinn-(IV)-chlorid. Vorzugsweise wird je $dm^3$ im Reaktionsraum vorhandenen Zinn-(IV)-chlorids 60 bis 150 $Ndm^3h^{-1}$ Chlor eingeleitet.

Der Überschuß des metallischen Zinns sollte auf mindestens dem vierfachen Gewicht des je Stunde eingeleiteten Chlorgewichtes gehalten werden. Ist weniger Zinn im Reaktionsraum vorhanden, so treten erhöhte Verluste an gasförmigem Chlor ein, außerdem können Schwierigkeiten beim Nachfüllen des metallischen Zinns entstehen, da hierbei zu viel Chlor austritt bzw. unkontrollierte Reaktion des Zinns mit Chlor im Gasraum über dem Zinn-(IV)-chlorid stattfindet. Nach oben ist der Überschuß des metallischen Zinns gegenüber dem eingeleiteten Chlor nur durch wirtschaftliche Erwägungen begrenzt. Im allgemeinen wird man nicht mehr als 100 Gewichtsteile metallischen Zinns je pro Stunde eingeleiteten Gewichtsteils Chlor verwenden. Vorteilhaft wird ein Überschuß von 6 bis 60 Gewichtsteilen metallischen Zinns je pro Stunde eingeleitetem Gewichtsteil Chlor, das sind etwa 20 bis 200 g Zinn je $Ndm^3h^{-1}$ Chlor, angewendet.

»Reaktionsraum« im Sinne der vorliegenden Erfindungsbeschreibung ist der Raum, in dem metallisches Zinn neben Zinn-(IV)-chlorid und Chlor vorliegt und in dem das Zinn-(IV)-chlorid umgepumpt wird, einschließlich dem in den entsprechenden Reaktionsgefäßen über der Reaktionsmischung vorhandenen Gasraum. Zur Unterscheidung werden die später beschriebenen Räume, in denen metallisches Zinn neben Zinn-(IV)-chlorid vorliegt, jedoch kein Zinn-(IV)-chlorid umgepumpt und kein Chlor eingeleitet wird, als »Nachbehandlungs-Reaktionsräume« bezeichnet.

Die Menge des im Kreis geführten Zinn-(IV)-chlorids hängt ab von der Menge des eingeleiteten Chlors und von der Temperaturdifferenz des Zinn-(IV)-chlorids vor und nach der Kühlung. Wie oben bereits erwähnt, wird, um unnötigen Kühlaufwand zu vermeiden, das Zinn-(IV)-chlorid auf Temperaturen von 10 bis 25°C gekühlt. Werden weniger als 0,08 $dm^3h^{-1}$ Zinn(IV)-chlorid je 1 $dm^3h^{-1}$ eingeleitetes Chlor im Kreis geführt, so kann die gewünschte Reaktionstemperatur nicht mehr sicher gehalten werden, es treten unnötige Verluste von Chlor und Zinn-(IV)-chlorid ein, die an den Gasraum abgegeben werden. Werden mehr als 0,3 $dm^3h^{-1}$ flüssiges Zinn-(IV)-chlorid je 1 $Ndm^3h^{-1}$ eingeleitetes Chlor im Kreis geführt, so sinkt die Temperatur im Reaktionsraum zu stark ab, worunter die Raum-Zeit-Ausbeute leidet. Bevorzugt werden je 1 $Ndm^3h^{-1}$ in den Reaktionsraum eingeleitetes Chlor 0,12 bis 0,2 $dm^3h^{-1}$ flüssiges Zinn-(IV)-chlorid unter Kühlung im Kreis geführt.

In einer bevorzugten Ausführungsform des erfindungsgemäßen Verfahrens besteht der Reaktionsraum, aus dem man Zinn-(IV)-chlorid entnimmt und im Kreis führt, aus mehreren voneinander getrennten Reaktionsräumen, die jeder mit metallischem Zinn gefüllt sind und nacheinander von Zinn-(IV)-chlorid durchflossen werden, wobei man in den Reaktionsraum, in den das Zinn-(IV)-chlorid zurückgeführt wird, entweder die gesamte Menge oder die Hauptmenge des Chlors einleitet und gegebenenfalls die Restmenge des Chlors in den in Strömungsrichtung des Zinn-(IV)-chlorids nachfolgenden Reaktionsraum einführt. Als voneinander getrennte Reaktionsräume können zweckmäßig mehrere, vorzugsweise 2 bis 4, zylindrische, senkrecht stehende Reaktionsgefäße verwendet werden, wie sie weiter oben beschrieben sind. Das Zinn-(IV)-chlorid, das ein Reaktionsgefäß durch die obere, seitlich am Mantel angebrachte Öffnung verläßt, wird zweckmäßig am Boden des nächsten Reaktionsgefäßes wieder eingeleitet. Das aus dem in Strömungsrichtung des Zinn-(IV)-chlorids letzten Reaktionsgefäß abgeführte flüssige Zinn-(IV)-chlorid wird gekühlt und in das in Strömungsrichtung des Zinn-(IV)-chlorids erste Reaktionsgefäß am Boden wieder eingeleitet, wobei so viel Zinn-(IV)-chlorid abgeführt wird, daß die Standhöhe der Flüssigkeit in den Reaktionsgefäßen, die zweckmäßig kaskadenförmig aufgestellt sind, gleich bleibt. Es ist selbstverständlich auch möglich, mehrere Kreisführungen von gekühltem, flüssigem Zinn-(IV)-chlorid anzuwenden, doch ist dies in der Regel ein unnötiger Aufwand.

Im allgemeinen ist es ausreichend, die gesamte Menge des Chlors am Boden des in Strömungsrichtung des Zinn-(IV)-chlorids ersten Reaktionsraums einzuleiten. Insbesondere, wenn mehr als zwei Reaktionsräume angewendet werden, kann es vorteilhaft sein, einen Teil des Chlors, das heißt weniger als etwa 40% der gesamten Chlormenge und vorzugsweise weniger als 25% der gesamten Chlormenge, in den in Strömungsrichtung des Zinn-(IV)-chlorids zweiten Reaktionsraum am Boden einzuführen. Werden mehrere Reaktionsräume zur Umsetzung von Zinn mit Chlor unter Kreisführung von Zinn-(IV)-chlorid benutzt, so gelten die in den vorangegangenen Beschreibungsseiten für einen Reaktionsraum angegebenen Bedingungen sinngemäß auch für die Gesamtheit von mehreren Reaktionsräumen.

Das aus dem Kreislauf abgeführte Zinn-(IV)-chlorid wird in mindestens einem weiteren Reaktionsraum (zur Unterscheidung »Nachbehandlungs-Reaktionsraum« genannt), der mit metallischem Zinn und Zinn-(IV)-chlorid gefüllt ist, ohne Zuführung von Chlor, bei einer Temperatur von 60 bis 100°C und einer mittleren Verweilzeit von 1 bis etwa 7 h behandelt. Um die Apparatekosten nicht zu stark ansteigen zu lassen, wird man im allgemeinen nicht mehr als 5 Nachbehandlungs-Reaktionsräume verwenden. Diese Nachbehandlung dient dazu, den Chlorgehalt des Zinn-(IV)-chlorids auf unter 0,02 Gew.-% herabzusetzen. Da das aus dem Kreislauf abgeführte Zinn-(IV)-chlorid nur noch wenig, in der Regel nicht mehr als 0,3 bis 1 Gew.-%, Chlor enthält, reicht die Reaktionswärme normalerweise nicht aus, den Nachbehandlungs-Reaktionsraum auf der gewünschten Temperatur zu halten. Er muß daher, beispielsweise mittels eines Doppelmantels, der von einem Heizmedium, beispielsweise Wasser oder Öl, durchflossen ist, beheizt werden. Sinkt die Temperatur in dem Nachbehandlungs-Reaktionsraum unter 60°C, so ist es nicht mehr möglich, in wirtschaftlich vertretbaren Verweilzeiten ein nahezu chlorfreies Zinn-(IV)-chlorid zu erhalten. Bei Temperaturen oberhalb 110°C verdampft zu viel Zinn-(IV)-chlorid, was einen unnötigen apparativen Kühlaufwand erfordert; außerdem treten unnötige Chlorverluste ein. Vorzugsweise wird die Nachbehandlung des Zinn-(IV)-chlorids in Gegenwart von metallischem Zinn bei 80 bis 100°C durchgeführt.

Die Größe des Nachbehandlungs-Reaktionsraumes ist so zu wählen, daß darin das Zinn-(IV)-chlorid eine mittlere Verweilzeit von 1 bis etwa 7 Stunden hat. Unterhalb einer Stunde Verweilzeit ist im allgemeinen der Nachbehandlungseffekt nicht ausreichend. Nach oben ist die Verweilzeit nur durch wirtschaftliche Erwägungen begrenzt. Vorzugsweise wird bei der Nachbehandlung des Zinn-(IV)-chlorids eine Verweilzeit von 1,5 bis 3,5 Stunden eingestellt.

In einer weiteren bevorzugten Ausführungsform des erfindungsgemäßen Verfahrens besteht auch der Nachbehandlungs-Reaktionsraum aus mehreren, insbesondere zwei bis drei voneinander getrennten Reaktionsräumen, die mit metallischem Zinn gefüllt sind und nacheinander von Zinn-(IV)-chlorid durchflossen werden. Für die Nachbehandlung können, wie für die Hauptreaktion, die weiter oben beschriebenen senkrecht stehenden, zylindrischen Gefäße verwendet werden.

Nach Verlassen des letzten Nachbehandlungs-Reaktionsraumes wird das Zinn-(IV)-chlorid auf Raumtemperatur gekühlt und, beispielsweise über Mehrschichtfilter mit Papierauflage oder Gewebefilter oder Vliesfilter, filtriert. Eine Rückführung von Zinn-(IV)-chlorid entfällt.

Es ist insbesondere bei kontinuierlichem Betrieb vorteilhaft, in dem Kreislauf, in dem flüssiges Zinn-(IV)-chlorid unter Kühlung während der Hauptreaktion umgepumpt wird, in einem Nebenschluß ein Filter vorzusehen. Von Zeit zu Zeit, nach längerer oder kürzerer Betriebsdauer, je nach den Verunreinigungen des eingesetzten Zinns beziehungsweise Chlors, wird das im Kreis geführte Zinn-(IV)-chlorid über den Nebenschluß einige Stunden filtriert und während dieser Zeit, sofern erforderlich, mit verminderter Menge des eingeleiteten Chlors gefahren.

Es ist ferner vorteilhaft, die während der Hauptreaktion eingeleitete Menge Chlor und umgepumpte, gekühlte Menge Zinn-(IV)-chlorid in Abhängigkeit von der Temperatur im Reaktionsraum oder in einem der Reaktionsräume, in denen die Hauptreaktion stattfindet, zu regeln.

Durch die Reaktion des Chlors mit dem metallischen Zinn nimmt letzteres in den verschiedenen Reaktionsräumen mehr oder weniger schnell ab. Um eine gleichmäßig gute Raum-Zeit-Ausbeute und einen guten Nachbehandlungseffekt zu gewährleisten ist es vorteilhaft, in jeden Reaktionsraum, auch in den (die) zur Nachbehandlung dienenden, metallisches Zinn in Form fester Stücke oder Barren kontinuierlich oder absatzweise (chargenweise) nachzufüllen, spätestens wenn nur zwei Drittel und vorzugsweise wenn nur vier Fünftel des gesamten mit Zinn-(IV)-chlorid gefüllten Reaktionsraumes metallisches Zinn enthält. Es ist ferner von Vorteil, in der Nachbehandlung feinteiligeres Zinn, beispielsweise kleinere Stücke oder Granulat, einzusetzen, als bei der Hauptreaktion, für die auch Barren, beispielsweise mit dem 10- bis 1000fachen Gewicht der in der Nachbehandlung eingesetzten Zinnstücke, verwendet werden können.

Bei der Einfüllung des Zinns in die Reaktionsräume sind keine besonderen Apparaturen oder Sicherheitsvorkehrungen erforderlich. Das Austreten von Chlor oder Zinn-(IV)-chlorid-Dämpfen wird dadurch vermieden, daß zusammen mit dem Zinn ein schwacher Inertgasstrom, vorteilhaft trockener Stickstoff oder trockene Luft, in den Reaktionsraum eingeleitet wird. Wie bereits oben erwähnt, können die Reaktionsräume ohne Schwierigkeit auch über die Standhöhe des flüssigen Zinn-(IV)-chlorids mit Stücken von metallischem Zinn gefüllt werden. Durch die vergleichsweise niedrige Konzentration im Gasraum treten keinerlei Schwierigkeiten auf.

Die Reaktionsräume, auch der (die) zur Nachbehandlung dienenden, sind zweckmäßig nicht vollständig mit Zinn-(IV)-chlorid und Zinn gefüllt sondern enthalten einen Gasraum, in den Zinn-(IV)-chlorid entsprechend seinem Dampfdruck bei der an der Flüssigkeitsoberfläche herrschenden Temperatur und Chlor, entsprechend seiner Löslichkeit in Zinn-(IV)-chlorid und seiner Konzentration an der Oberfläche der Flüssigkeit entbunden wird. Es ist vorteilhaft, in die Gasräume mindestens ein Gas einzuführen, das mit Chlor, Zinn oder Zinn-(IV)-chlorid unter den herrschenden Bedingungen nicht reagiert, so daß der Partialdruck dieses Gases 60 bis 99,5%, und insbesondere 75 bis 90%, des gesamten im Gasraum herrschenden Druckes beträgt. Hierdurch werden die Verluste an Chlor und Zinn-(IV)-chlorid verkleinert. Als nicht-reagierende Gase kommen beispielsweise in Betracht: Kohlendioxid, Sauerstoff, Neon und insbesondere Stickstoff oder Luft. Alle diese Gase sollen trocken sein, das heißt, sie sollen so wenig wie möglich Wasserdampf beigemischt enthalten.

Zum Ausgleich von unerwünschten Druckanstiegen wird Gas aus den in den Reaktionsräumen befindlichen Gasräumen abgeführt, auf etwa 20°C gekühlt, um den Gehalt des Gases an Zinn-(IV)-chlorid-Dämpfen zu vermindern, danach zunächst mit Wasser und dann mit wäßrigem Alkali gewaschen, um Chlor und restliche Zinn-(IV)-chlorid-Dämpfe zu entfernen. Das so gereinigte Gas wird in die Atmosphäre entlassen.

Das neue Verfahren wird im allgemeinen bei normalem Atmosphärendruck ausgeführt. Es kann auch bei erhöhtem Druck, beispielsweise 0,11 bis 1 MPa, gearbeitet werden, doch rechtfertigen die bei Anwendung von Druck umständlichere Arbeitsweise und die höheren Apparatekosten häufig nicht die durch Druckanwendung erzielbaren Vorteile wie zum Beispiel bessere Raum-Zeit-Ausbeuten.

Das nach der Nachbehandlung und Filtrierung anfallende Zinn-(IV)-chlorid enthält weniger als 0,1 Gew.-% freies Chlor. Es kann vorteilhaft zur weiteren Reinigung und Verbesserung der Farbe mit adsorbierenden Mitteln, insbesondere mit Aktivkohle, in Kontakt gebracht werden. Die adsorbierenden Mittel sollen kein Wasser enthalten, das mit Zinn-(IV)-chlorid unter Hydratbildung reagiert, da hierdurch leicht Klumpenbildung eintritt und die Wirkung der adsorbierenden Mittel dadurch stark beeinträchtigt wird.

Das erfindungsgemäße Verfahren ermöglicht es, in unkomplizierten, leicht zu reinigenden Apparaturen, die aus billigen Werkstoffen bestehen, Zinn-(IV)-chlorid kontinuierlich über Monate störungsfrei und ohne größeren Regelaufwand in guter Qualität bei beachtlicher Effektivität herzustellen. Das erzeugte Zinn-(IV)-chlorid ist praktisch für alle bekannten technischen Einsatzgebiete verwendbar.

Nachfolgende Beispiele sollen die Erfindung näher erläutern:

Folgende Apparatur wird verwendet:

Ein senkrecht stehendes, zylindrisches Glasrohr (I) von 550 mm Länge und 40 mm innerem Durchmesser ist unten verschlossen und enthält in 20 mm Entfernung vom unteren Abschluß eine senkrecht zur Rohrachse angebrachte gelochte Platte, deren Löcher einen Durchmesser von 2 mm aufweisen. Am unteren Abschluß des Rohres ist je eine zentrale und eine seitliche Öffnung mit getrennten Zuleitungen angebracht. Das Glasrohr trägt in 450 mm und 490 mm Entfernung vom unteren Abschluß je eine seitliche Öffnung mit Zuleitung und besitzt am oberen Ende einen Schliff, auf den eine Kappe mit 40 mm innerem Durchmesser dichtschließend aufgesetzt ist, die ihrerseits eine zentrale Öffnung mit Zuleitung aufweist. Außerdem ist an dem zylindrischen Glasrohr, 435 mm vom unteren Abschluß entfernt, ein Temperatur-Meßfühler angebracht.

Ein zweites, senkrecht stehendes, zylindrisches Glasrohr (II) hat die gleichen Abmessungen und den gleichen Aufbau wie das zuvor beschriebene.

Von beiden Glasrohren (I und II) sind die zentral am unteren Abschluß gelegenen Öffnungen über Rückschlagventile und Regelventile mit einer Quelle für trockenes Chlorgas verbunden; die an den oberen Abschlußkappen gelegenen Öffnungen sind über eine Leitung miteinander verbunden und über ein Regelventil an eine Quelle für trockenen Stickstoff angeschlossen.

Die an beiden Glasrohren (I und II) in 490 mm Höhe angebrachten Öffnungen sind über eine Rückschlag-Sicherung mit drei Gaswaschflaschen verbunden.

Die am ersten Glasrohr (I) in 450 mm Höhe angebrachte Öffnung ist über eine Leitung mit der seitlichen Öffnung am unteren Abschluß des zweiten Glasrohres (II) verbunden. Diese Verbindungsleitung hat einen Abzweig, der über einen Hahn mit der Saugseite der weiter unten beschriebenen Pumpe verbunden ist.

Die am zweiten Glasrohr (II) in 450 mm Höhe angebrachte Öffnung ist mit einem Puffer- bzw. Vorratsgefäß verbunden, das unten eine Ableitung besitzt, die mit der Saugseite einer Pumpe vom Typ Vanton Flex-i-liner® verbunden ist. Das Vorratsgefäß ist mit einer Steigleitung an die Abgasleitung angeschlossen. Von der Druckseite dieser Pumpe läuft eine Leitung, die einen mit Hahn verschlossenen Abzweig trägt, zu einem Schlangenkühler, dessen Austrittsseite über eine Leitung, die einen Thermofühler enthält, mit der seitlichen Öffnung am unteren Abschluß des Glasrohres (I) verbunden ist.

Das vorher erwähnte Puffer- bzw. Vorratsgefäß hat unten eine zweite Ableitung, die über einen Hahn mit einer zentralen Öffnung am unteren Abschluß eines dritten zylindrischen Glasrohres (III) verbunden ist, das wiederum aufgebaut ist wie das erste bzw. zweite Glasrohr, jedoch mit dem Unterschied, daß es einen Doppelmantel besitzt und am unteren Abschluß nur eine zentrale Öffnung. Die Öffnung in 450 mm Höhe am dritten Glasrohr (III) ist über eine Leitung verbunden mit der zentralen Öffnung am unteren Abschluß eines vierten Glasrohres (IV), das aufgebaut ist wie das dritte Glasrohr.

Die Öffnung in 450 mm Höhe am vierten Glasrohr (IV) ist verbunden mit einem Schlangenkühler, dessen Austritt mit einem Papierfilter, daran anschließend mit einem Aktivkohlefilter und schließlich mit einem Vorratsgefäß für das Endproduk verbunden ist, das mit einer Vakuumpumpe bei einem Druck unterhalb des atmosphärischen Luftdruckes gehalten werden kann, wenn Flüssigkeits-Stauung im Filter auftritt.

Die zentralen Öffnungen in den Kappen, die die Glasrohre III und IV oben abschließen, sind zusammen mit denen der Glasrohre I und II über ein Regelventil mit einer Quelle für trockenen Stickstoff verbunden. Die Öffnungen in 490 mm Höhe an den Glasrohren III und IV sind zusammen mit denen der Glasrohre I und II mit der zuvor beschriebenen Gaswascheinrichtung verbunden.

### Beispiel 1

Es wird eine Apparatur mit vier senkrecht stehenden Glasrohren verwendet, wie zuvor beschrieben. Alle vier Glasrohre werden mit je 1800 g metallischem Zinn der Reinheit 99,9% gefüllt, die Glasrohre I und II mit zylindrischen Zinnblöckchen von 7 mm Durchmesser und 10 mm Höhe, die Glasrohre III und IV mit Zinn-Granulat von etwa 6 mm Durchmesser.

Nun wird Zinn-(IV)-chlorid in die Glasrohre gegeben bis zur Höhe der ersten seitlichen Öffnung (450 mm). Die Glasrohre werden mit den Kappen geschlossen und über die zentralen Öffnungen in den Kappen ein schwacher Strom von 2 l/h trockener Stickstoff in den Raum über der Flüssigkeit in den Glasrohren eingeleitet. Die ersten beiden Gaswaschflaschen, die mit den in 490 mm Höhe an den Glasrohren angebrachten Öffnungen verbunden sind, sind mit Wasser, die dritte Gaswaschflasche ist mit 5%iger Natronlauge gefüllt.

Nun wird das Zinn-(IV)-chlorid mit einer Leistung von 6 dm³h⁻¹ umgepumpt, bevor 40 Ndm³h⁻¹ trockenes Chlor in das Glasrohr I durch die zentrale Öffnung am unteren Abschluß eingeleitet werden, das sind 63 Ndm³h⁻¹ Chlor je dm³ im Reaktionsraum vorhandenen Zinn-(IV)-chlorids und 0,15 dm³h⁻¹ umgepumptes Zinn-(VI)-chlorid je Ndm³h⁻¹ eingeleitetes Chlor. Nachdem die Temperatur in der Flüssigkeit im oberen Teil des Glasrohres I auf 70°C gestiegen ist, wird der im Pumpenkreislauf befindliche Kühler eingeschaltet.

Mit Beginn des Einleitens von Chlor werden die Doppelmäntel der Glasrohre III und IV mit Wasser von 95°C geheizt.

Die Standhöhe der Flüssigkeit in den Glasrohren I und II wird durch langsames Öffnen des zwischen dem Puffer- oder Vorratsgefäß und dem Glasrohr III befindlichen Hahnes so geregelt, daß sie die seitliche Öffnung in 450 mm Höhe nicht wesentlich übersteigt. Der Hahn am Abzweig von der Verbindungsleitung zwischen Glasrohr I und Glasrohr II wird nur im Bedarfsfall geöffnet, um die Standhöhe der Flüssigkeit in den Glasrohren I und II etwa gleich zu halten.

Das durch die seitliche Öffnung in 450 mm Höhe am Glasrohr IV abfließende Zinn-(IV)-chlorid durchläuft einen Kühler und ein Papierfilter.

Nach 2 h Betriebsdauer haben sich konstante Betriebsparameter eingestellt. Diese betragen:

Der Zinnüberschuß beträgt am Beginn der Reaktion das 28fache des Gewichtes des je Stunde eingeleiteten Chlors.
Temperatur am Kopf von Rohr I       73°C
Temperatur am Kopf von Rohr II      65°C
Temperatur am Kopf von Rohr III     93°C
Temperatur am Kopf von Rohr IV     91°C;
Temperatur am Ausgang des Kreislaufkühlers: 21°C;
erzeugte Menge Zinn-(IV)-chlorid: 231 g h⁻¹ (97,8% bezogen auf $Cl_2$);
mittlere Verweilzeit in den Glasrohren III und IV: 6,1 h;
Produktqualität: Aussehen glasklar, Farbe gelblich;
Gehalt an elementarem Chlor: 0,006 Gew.-%;
Ausbeute bezogen auf eingesetztes Chlor: 97,8%.

Die Apparatur wird 5 Tage ununterbrochen betrieben, wobei die angegebenen Werte praktisch konstant bleiben. Wenn die Standhöhe des metallischen Zinns in den Glasrohren I und II auf ⁴/₅ der ursprünglichen Standhöhe gesunken ist, wird ohne Unterbrechung des Betriebes die Kappe des jeweiligen Rohres abgenommen und Zinn bis zur ursprünglichen Standhöhe nachgefüllt.

Nach der angegebenen Betriebszeit wird im Anschluß an das Papierfilter das Zinn-(IV)-chlorid durch Aktivkohle geleitet. Es wird so ein glasklares, ungefärbtes Produkt mit einem Gehalt an elementarem Chlor von 0,005 Gew.-% erhalten.

## Beispiel 2

Es wird gearbeitet wie in Beispiel 1 beschrieben, mit dem Unterschied, daß 75 Ndm³h⁻¹ trockenes Chlor in das Glasrohr I eingeleitet werden und die Flüssigkeit in den Glasrohren I und II mit einer Leistung von 15 dm³h⁻¹ umgepumpt wird. Der Doppelmantel der Glasrohre III und IV wird mit Wasser von 70°C geheizt.

Nach 2 h Betriebsdauer haben sich konstante Betriebsparameter eingestellt, diese betragen:

eingeleitetes Chlor: 118 Ndm³h⁻¹ je dm³ im Reaktionsraum vorhandenes Zinn-(IV)-chlorid;
umgepumpte Flüssigkeit: 0,2 dm³h⁻¹ je Ndm³h⁻¹ eingeleitetes Chlor.
Der Zinnüberschuß beträgt am Beginn der Reaktion das 15fache des Gewichtes des je Stunde eingeleiteten Chlors.
Temperatur am Kopf von Rohr I          58°C
Temperatur am Kopf von Rohr II         64°C
Temperatur am Kopf von Rohr III        73°C
Temperatur am Kopf von Rohr IV         71°C;
Temperatur Ausgang Kreislaufkühler: 23°C;
erzeugte Menge Zinn-(IV)-chlorid: 426 gh⁻¹;
mittlere Verweilzeit in den Glasrohren III und IV: 3¹/₃ h;
Produktqualität; Aussehen glasklar, gelblich, nach Aktivkohlefiltration farblos;
Gehalt an elementarem Chlor: 0,006 Gew.-%;
Ausbeute, bezogen auf eingesetztes Chlor: 96,1%

## Beispiel 3

Es wird gearbeitet wie in Beispiel 1 beschrieben, mit dem Unterschied, daß 100 Ndm³h⁻¹ trockenes Chlor in das Glasrohr I und 30 Ndm³h⁻¹ Chlor in das Glasrohr II eingeleitet werden. Die Flüssigkeit in den Glasrohren I und II wird mit einer Leistung von 20 dm³h⁻¹ umgepumpt. Der Doppelmantel der Glasrohre III und IV wird mit Wasser von 95°C beheizt. Nach 2 h Betriebsdauer haben sich konstante Betriebsparameter eingestellt. Das Zinn in den Glasrohren wird, wie in Beispiel 1 beschrieben, nachgefüllt, wenn die Zinnstücke in den Glasrohren auf ⁴/₅ ihrer zu Beginn des Versuches erreichten Standhöhe abgesunken sind. Hierbei werden in die Glasrohre I und II soviele Zinnstücke eingegeben, daß die Rohre bei abgenommener Verschlußkappe randvoll sind. Die Zinnfüllung ragt in diesen Rohren ca. 45 mm über die Standhöhe der Flüssigkeit hinaus. Folgende Betriebsparameter werden festgestellt:

eingeleitetes Chlor: 204 Ndm³h⁻¹ je dm³ im Reaktionsraum vorhandenen Zinn-(IV)-chlorids;
umgepumpte Flüssigkeit: 0,15 dm³h⁻¹ je Ndm³h⁻¹ eingeleitetes Chlor;
Zinnüberschuß am Beginn des Versuches: das 8,6fache des Gewichtes des je Stunde eingeleiteten Chlors;
Temperatur am Kopf von Rohr I          79°C
Temperatur am Kopf von Rohr II         80°C
Temperatur am Kopf von Rohr III        95°C
Temperatur am Kopf von Rohr IV         94°C
Temperatur Ausgang Kreislaufkühler: 23°C
erzeugte Menge Zinn-(IV)-chlorid: 718 gh⁻¹;
mittlere Verweilzeit in den Glasrohren III und IV: 2 h;
Produktqualität: Aussehen glasklar, gelblich;
Gehalt an elementarem Chlor: 0,008 Gew.%;
Ausbeute, bezogen auf eingesetztes Chlor: 93,6%.

## Beispiel 4

Es wird eine Apparatur ähnlich der eingangs beschriebenen verwendet, die jedoch nur aus zwei senkrecht stehenden, zylindrischen Glasrohren besteht. Das erste der beiden Glasrohre hat denselben Aufbau wie das weiter oben beschriebene Glasrohr I, das zweite der beiden Glasrohre hat denselben Aufbau wie das weiter oben beschriebene Glasrohr III.

In jedes der beiden Glasrohre werden 1600 g metallisches Zinn der Reinheit 99,9% in Form von Granulat mit etwa 6 mm Teilchendurchmesser und bis zur Höhe der seitlichen Öffnung in 450 mm Höhe Zinn-(IV)-chlorid gefüllt. Der Versuch wird wie in Beispiel 1 beschrieben durchgeführt, mit folgenden Änderungen: Es werden 50 Ndm³h⁻¹ Chlor in das erste Glasrohr unten eingeleitet und 8 dm³h⁻¹ Flüssigkeit in diesem Glasrohr umgepumpt. Der Doppelmantel des zweiten Glasrohres wird mit Wasser von 85°C geheizt. Zwischen den beiden senkrecht stehenden Glasrohren ist, analog der weiter oben beschriebenen Apparatur, ein Puffer oder Vorratsgefäß mit Hahn eingeschaltet. Letzterer wird so eingestellt, daß die Flüssigkeit im ersten Glasrohr nicht wesentlich über die seitliche Öffnung in 450 mm Höhe steigt.

Nach zwei Stunden haben sich folgende, etwa konstante Betriebsbedingungen eingestellt:

eingeleitetes Chlor: 116 Ndm$^3$h$^{-1}$ je dm$^3$ im Reaktionsraum vorhandenes Zinn-(IV-chlorid);
umgepumpte Flüssigkeit: 0,2 dm$^3$h$^{-1}$ je Ndm$^3$h$^{-1}$ eingeleitetes Chlor;
Zinnüberschuß bei Versuchsbeginn: das 12,4fache des je Stunde eingeleiteten Chlors;
Temperatur am Kopf des ersten Rohres:          70° C;
Temperatur am Kopf des zweiten Rohres:         85° C;
Temperatur am Ausgang des Kreislaufkühlers: 21° C;
erzeugte Menge Zinn-(IV)-chlorid: 222 gh$^{-1}$;
mittlere Verweilzeit im zweiten Rohr: 3, 5 h;
Produktqualität: Aussehen glasklar, gelblich, nach Aktivkohlefiltration farblos;
Gehalt an elementarem Chlor: 0,01 Gew.-%;
Ausbeute, bezogen auf eingesetztes Chlor: 93,9%.

<center>Vergleichsversuch (analog US-PS 1 897 360)</center>

Ein aufrecht stehender, zylindrischer Behälter von 100 mm innerem Durchmesser und 190 mm Höhe enthält an seinem Boden in der Mitte eine Öffnung, die über ein Rückschlagventil mit einem Regelventil verbunden ist, und außerhalb der Mitte zwei weitere Öffnungen. Seitlich in 150 mm Höhe vom Boden des Behälters entfernt ist am Mantel des Behälters eine weitere Öffnung angebracht, die über einen Schlangenkühler mit der Saugseite einer Vanton Flex-i-liner®-Pumpe verbunden ist, deren Druckseite mit einer der außerhalb der Behältermitte am Boden befindlichen Öffnungen in Verbindung steht. Die zweite dieser Öffnungen hat eine Zuleitung mit Hahn. Der Behälter trägt einen abnehmbaren Kugelkühler, dessen Ausgang mit der Leitung verbunden ist, die zur zentralen Öffnung am Boden des Behälters führt. Von dieser Leitung geht ein Abzweig mit Hahn zu einer Rückschlag-Sicherung und weiter zu drei Gaswaschflaschen.

Im Behälter ist in 20 mm Höhe über dem Boden eine gelochte Platte angebracht.

Zu Beginn des Versuches werden in den Behälter 3000 g Zinn der Reinheit 99,9% in Form von kleinen zylindrischen Blöcken mit 7 mm Durchmesser und 10 mm Höhe gegeben und dazu flüssiges Zinn-(IV)-chlorid bis zur seitlich in 150 mm Höhe am Behälter angebrachten Öffnung. Die Zinnblöcke sind vollständig mit Zinn-(IV)-chlorid überdeckt. Nun werden 350 Ndm$^3$h$^{-1}$ trockenes Chlor über die zentrale Öffnung am Boden des Behälters eingeleitet, 6 dm$^3$h$^{-1}$ der Flüssigkeit im Reaktionsraum umgepumpt und der Kugelkühler eingeschaltet. Wenn die Flüssigkeit im Behälter zu sieden beginnt, wird auch der Schlangenkühler eingeschaltet. Der Hahn an der zweiten seitlichen Öffnung am Boden des Behälters wird soweit geöffnet, daß die Flüssigkeit im Behälter die seitlich in 150 mm Höhe angebrachte Öffnung nicht übersteigt. Das ablaufende Produkt wird in einem weiteren Gefäß gesammelt, daraus Proben entnommen und auf den Gehalt an freiem Chlor analysiert. ¹/₂ Stunde nach Versuchsbeginn enthält das erzeugte Zinn-(IV)-chlorid 1,1 Gew.-% freies Chlor. Der Wert steigt in der folgenden Zeit an. 1¹/₂ Stunden nach Versuchsbeginn ist der größere Teil des metallischen Zinns verbraucht. Die Chlorzuführung wird unterbrochen, der Hahn am Abzweig nach dem Kugelkühler geöffnet und die Vorrichtung mit trockenem Stickstoff gespült, um die aus Chlor und Zinn-(IV)-chlorid-Dämpfen bestehende Atmosphäre im Behälter und Kugelkühler über die Gaswaschflaschen zu entfernen. Die in Gasströmungsrichtung erste Gaswaschflasche ist mit Wasser, die nachfolgenden Gaswaschflaschen sind mit 5%iger Natronlauge gefüllt.

Nun wird der Kugelkühler vom Behälter abgenommen, um metallisches Zinn, wie oben beschrieben, bis zur Standhöhe der Zinnblöckchen bei Beginn des Versuches nachzufüllen. Der Kugelkühler wird wieder aufgesetzt, die Stickstoffzufuhr unterbrochen und wieder Chlor in der oben beschriebenen Menge eingeleitet. Um den größten Teil des Stickstoffs aus dem Behälter zu verdrängen, bleibt der Hahn am Abzweig nach dem Kugelkühler noch etwa 5 min geöffnet und wird dann geschlossen. Das Vorratsgefäß für das erzeugte Zinn-(IV)-chlorid wird gewechselt. Eine halbe Stunde nach dem erneuten Einleiten von Chlor enthält das erzeugte Zinn-(IV)-chlorid 0,9 Gew.-% freies Chlor. Eine weitere Stunde später wird wiederum metallisches Zinn nachgefüllt, nachdem, wie oben beschrieben, mit trockenem Stickstoff gespült worden war.

Um den Zeitraum bis zum nächsten Öffnen der Apparatur zu verlängern, wird diesmal soviel metallisches Zinn eingefüllt, daß es die Standhöhe des flüssigen Zinn-(IV)-chlorids im Behälter um 25 mm überragt. Nachdem erneut, wie oben beschrieben, Chlor eingeleitet wird, werden mit der Zeit zunehmend unkontrollierte Reaktionen des Zinns mit dem Chlor im Gasraum über dem flüssigen Zinn-(IV)-chlorid beobachtet, die zu Lichterscheinungen und teilweisem Zusammensintern der Zinnblöckchen sowie auch zum stoßartigen Aufsieden des vom Kugelkühler herabtropfenden Zinn-(IV)-chlorids führen. Durch das Sintern der Zinnblöckchen wird deren gleichmäßiges Nachrutschen in das flüssige Zinn-(IV)-chlorid behindert, der Versuch wird abgebrochen.

Eine Stunde nach Beginn des gesamten Versuches werden folgende Betriebsparameter festgestellt:

eingeleitetes Chlor: 457 Ndm$^3$h$^{-1}$ je dm$^3$ im Reaktionsraum vorhandene Flüssigkeit;

<center>9</center>

umgepumpte Flüssigkeit: 0,013 dm³h⁻¹ auf 1 Ndm³h⁻¹ in der Stunde eingeleitetes Chlor.

Der Zinnüberschuß am Beginn der Reaktion beträgt das 2,6fache des in der Stunde eingeleiteten Chlorgewichtes.

Die Reaktion verläuft unter Normaldruck bei siedendem Zinn-(IV)-chlorid, also bei ca. 114°C. Das erzeugte Produkt ist trüb und deutlich gelb gefärbt. Es enthält 1,0 Gew.-% freies Chlor.

**Patentansprüche**

1. Verfahren zur Herstellung von Zinn-(IV)-chlorid durch Umsetzung von überschüssigem metallischem Zinn mit Chlor in Gegenwart von flüssigem Zinn-(IV)-chlorid bei Temperaturen von 20 bis 90°C, gegebenenfalls unter Druck, wobei man das Chlor in den Reaktionsraum unten einleitet, das gebildete Zinn-(IV)-chlorid oben aus dem Reaktionsraum entnimmt, nach Kühlung in den Reaktionsraum unten wieder einführt und dabei soviel Zinn-(IV)-chlorid abführt, daß die Standhöhe des Zinn-(IV)-chlorids im Reaktionsraum gleichbleibt, dadurch gekennzeichnet, daß man je dm³ im Reaktionsraum vorhandenen Zinn-(IV)-chlorids 30 bis 300 Ndm³h⁻¹ Chlor einleitet, den Überschuß des Zinns auf mindestens dem vierfachen Gewicht des je Stunde eingeleiteten Chlorgewichtes hält und je 1 Ndm³h⁻¹ eingeleitetes Chlor 0,08 bis 0,3 dm³h⁻¹ Zinn-(IV)-chlorid im Kreis führt, wobei man das aus dem Kreislauf abgeführte Zinn-(IV)-chlorid in mindestens einem weiteren Nachbehandlungs-Reaktionsraum, der mit metallischem Zinn und Zinn-(IV)-chlorid gefüllt ist, ohne Zuführung von Chlor bei einer Temperatur von 60 bis 110°C und einer mittleren Verweilzeit von 1 bis etwa 7 h behandelt, anschließend filtriert und gegebenenfalls mit absorbierenden Mitteln in Kontakt bringt.

2. Verfahren nach Anspruch 1, dadurch gekennzeichnet, daß der Reaktionsraum, aus dem man Zinn-(IV)-chlorid entnimmt und im Kreis führt, aus mehreren voneinander getrennten Reaktionsräumen besteht, die mit metallischem Zinn gefüllt sind und nacheinander von Zinn-(IV)-chlorid durchflossen werden, wobei man in den Reaktionsraum, in den das Zinn-(IV)-chlorid zurückgeführt wird, die gesamte Menge oder die Hauptmenge des Chlors einleitet und gegebenenfalls die Restmenge des Chlors in den in Strömungsrichtung des Zinn-(IV)-chlorids nachfolgenden Reaktionsraum einführt.

3. Verfahren nach einem der Ansprüche 1 oder 2, dadurch gekennzeichnet, daß der Nachbehandlungs-Reaktionsraum aus mehreren voneinander getrennten Nachbehandlungs-Reaktionsräumen besteht, die mit metallischem Zinn gefüllt sind und nacheinander von Zinn-(IV)-chlorid durchflossen werden.

4. Verfahren nach einem der Ansprüche 1 bis 3, dadurch gekennzeichnet, daß man die Umsetzung des Chlors mit Zinn unter Kreisführung von Zinn-(IV)-chlorid bei 30 bis 80°C durchführt.

5. Verfahren nach einem der Ansprüche 1 bis 4, dadurch gekennzeichnet, daß man bei der Umsetzung des Chlors mit Zinn unter Kreisführung von Zinn-(IV)-chlorid je dm³ im (in den) Reaktionsraum (Reaktionsräumen) vorhandenen Zinn-(IV)-chlorids 60 bis 150 Ndm³h⁻¹ Chlor einleitet.

6. Verfahren nach einem der Ansprüche 1 bis 5, dadurch gekennzeichnet, daß man bei der Umsetzung des Chlors mit Zinn unter Kreisführung von Zinn-(IV)-chlorid je 1 Ndm³h⁻¹ in den (die) Reaktionsraum (Reaktionsräume) eingeleitetes Chlor 0,12 bis 0,2 dm³h⁻¹ Zinn-(IV)-chlorid im Kreis führt.

7. Verfahren nach einem der Ansprüche 1 bis 6, dadurch gekennzeichnet, daß man die Nachbehandlung des Zinn-(IV)-chlorids bei 80 bis 100°C durchführt.

8. Verfahren nach einem der Ansprüche 1 bis 7, dadurch gekennzeichnet, daß man bei der Nachbehandlung des Zinn-(IV)-chlorids eine Verweilzeit von 1,5 bis 3,5 h einstellt.

9. Verfahren nach einem der Ansprüche 1 bis 8, dadurch gekennzeichnet, daß man in jeden Reaktionsraum, auch in den (die) zur Nachbehandlung dienenden, metallisches Zinn in Form fester Stücke oder Barren kontinuierlich oder absatzweise (chargenweise) nachfüllt, spätestens wenn nur noch $^2/_3$ des (der) gesamten mit Zinn-(IV)-chlorid gefüllten Reaktionsraumes (Reaktionsräume) metallisches Zinn enthält.

10. Verfahren nach einem der Ansprüche 1 bis 9, dadurch gekennzeichnet, daß jeder Reaktionsraum, auch der (die) zur Nachbehandlung dienenden, einen Gasraum enthält, in den man mindestens ein Gas einführt, das mit Chlor, Zinn oder Zinn-(IV)-chlorid unter den herrschenden Bedingungen nicht reagiert, so daß der Partialdruck dieses Gases 60 bis 99,5% des gesamten im Gasraum herrschenden Druckes beträgt.

11. Verfahren nach einem der Ansprüche 1 bis 10, dadurch gekennzeichnet, daß man in den Gasraum innerhalb des (der) Reaktionsraumes (Reaktionsräume) trockenen Stickstoff oder trockene Luft einleitet.

12. Verfahren nach einem der Ansprüche 1 bis 11, dadurch gekennzeichnet, daß man das Zinn-(IV)-chlorid im Anschluß an die Nachbehandlung mit Aktivkohle in Kontakt bringt.

## Claims

1. A process for the production of tin(IV) chloride by reacting excess metallic tin with chlorine in the presence of liquid tin(IV) chloride at temperatures of 20 to 90°C, optionally under pressure, in which process chlorine is passed from below into the reaction chamber, the tin(IV) chloride formed is removed at the top from the reaction chamber and is reintroduced into the reaction chamber from below after cooling and in which as much tin(IV) chloride is discharged as is required for the level of tin(IV) chloride in the reaction chamber to remain constant, characterized by passing in, per $dm^3$ of tin(IV) chloride present in the reaction chamber, 30 to 300 N (that means under normal conditions) $dm^3h^{-1}$ of chlorine, maintaining an excess of tin of at least four times the weight of the weight of chlorine passed in per hour, and recycling, per 1 N (that means under normal conditions) $dm^3h^{-1}$ of chlorine passed in, 0,08 to 0,3 $dm^3h^{-1}$ of tin(IV) chloride, tin(IV) chloride which is taken out of circulation being treated without the addition of chlorine at a temperature of 60 to 100°C and for an average residence time of 1 to about 7 h in at least one further reaction chamber filled with metallic tin and tin(IV) chloride, then filtering it and, if required, contacting it with absorbing agents.

2. The process as claimed in claim 1, characterised in that the reaction chamber from which tin(IV) chloride is removed and recycled is composed of a plurality of reaction chambers which are separate from one another, each of which is filled with metallic tin and through which successively tin(IV) chloride flows, whilst either the total amount or a major amount of chlorine is passed into the reaction chamber into which the tin(IV) chloride is returned and, if appropriate, a remaining amount of chlorine is introduced to the reaction chamber which is the next in the direction of flow of the tin(IV) chloride.

3. The process as claimed in claims 1 or 2, characterized in that the aftertreatment reaction chamber is composed of a plurality of aftertreatment reaction chambers which are separate from one another and filled with metallic tin and through which successively tin(IV) chloride flows.

4. The process as claimed in any of claims 1 to 3, characterized in that the reaction of chlorine with tin is carried out with tin(IV) chloride being recycled at 30 to 80°C.

5. The process as claimed in any of claims 1 to 4, characterized in that 60 to 150 N (that means under normal conditions) $dm^3h^{-1}$ of chlorine are introduced per $dm^3$ of tin(IV) chloride present in the reaction chamber(s) in the reaction of chlorine with tin with tin(IV) chloride being recycled.

6. The process as claimed in any of claims 1 to 5, characterized in that 0,12 to 0,2 $dm^3h^{-1}$ of tin(IV) chloride is recycled per 1 N (that means under normal conditions) $dm^3h^{-1}$ of chlorine passed into the reaction chamber(s) in the reaction of chlorine with tin with tin(IV) chloride being recycled.

7. The process as claimed in any of claims 1 to 6, characterized in that the aftertreatment of the tin(IV) chloride is carried out at 80 to 100°C.

8. The process as claimed in any of claims 1 to 7, characterized in that a residence time of 1,5 to 3,5 h is established in the aftertreatment of the tin(IV) chloride.

9. The process as claimed in any of claims 1 to 8, characterised in that each reaction chamber, also the one(s) serving for the aftertreatment, is replenished continuously or at intervals (batchwise) with metallic tin in the form of solid pieces or bars, at the latest when only $2/3$ of the reaction chamber(s) filled with tin(IV) chloride contain metallic tin.

10. The process as claimed in any of claims 1 to 9, characterized in that each reaction chamber, also the one(s) serving for the aftertreatment, contains a gas space into which at least one gas is introduced which does not react with chlorine, tin or tin(IV) chloride under the prevailing conditions, so that the partial pressure of this gas constitutes 60 to 99.5% of the total pressure prevailing in the gas space.

11. The process as claimed in any of claims 1 to 10, characterized in that dry nitrogen or dry air is passed into the gas space within the reaction chamber(s).

12. The process as claimed in any of claims 1 to 11, characterised in that the tin(IV) chloride is brought into contact with activated carbon after the aftertreatment.

## Revendications

1. Procédé pour la production de chlorure d'étain(IV), par réaction d'étain métallique en excès sur du chlore, en présence de chlorure d'étain(IV) liquide à des températures de 20 à 90°C, éventuellement sous pression, le chlore étant introduit dans l'espace de réaction par en-dessous, le chlorure d'étain(IV) formé étant extrait de l'espace de réaction par en haut, puis réintroduit après refroidissement dans l'espace de réaction par en-dessous, avec évacuation d'une quantité de chlorure d'étain(IV) suffisante pour que le niveau du chlorure d'étain(IV) dans l'espace de réaction reste constant, caractérisé en ce que l'on introduit par $dm^3$ de chlorure d'étain(IV) présent dans l'espace de réaction 30 à 300 $Ndm^3h^{-1}$ de chlore, que l'on maintient l'excès d'étain à au moins quatre fois le poids du chlore introduit chaque heure, et que l'on met en recyclage pour chaque $Ndm^3h^{-1}$ de chlore introduit 0,08 à 0,3 $dm^3h^{-1}$ de chlorure d'étain(IV), tandis qu'on traite le chlorure d'étain(IV) extrait du circuit fermé dans au moins un autre espace de post-réaction, lequel est rempli d'étain métallique et de chlorure d'étain(IV), sans addition de chlore, à une température de 60 à 110°C et avec un temps de séjour moyen de 1 à environ 7 heures, puis qu'on le filtre et éventuellement qu'on le met en contact avec des produits absorbants.

2. Procédé selon la revendication 1, caractérisé en ce que l'espace de réaction dont on prélève le chlorure d'étain(IV) pour le mettre en circuit fermé se compose de plusieurs espaces de réaction séparés les uns des autres, remplis d'étain métallique et traversés les uns après les autres par du chlorure d'étain(IV), tandis que l'on introduit dans l'espace de réaction dans lequel est renvoyé le chlorure d'étain(IV) en recyclage la quantité totale ou la quantité principale du chlore, et que l'on introduit éventuellement le reste de chlore dans l'espace de réaction suivant, considéré dans le sens de l'écoulement du chlorure d'étain(IV).

3. Procédé selon l'une quelconque des revendications 1 ou 2, caractérisé en ce que l'espace de post-réaction se compose de plusieurs espaces de post-réaction séparés les uns des autres, remplis d'étain métallique et traversés les uns après les autres par du chlorure d'étain(IV).

4. Procédé selon l'une quelconque des revendications 1 à 3, caractérisé en ce qu'on réalise la réaction du chlore sur l'étain par recyclage du chlorure d'étain(IV) à 30 à 80°C.

5. Procédé selon l'une quelconque des revendications 1 à 4, caractérisé en ce que, lors de la réaction du chlore sur l'étain, et avec recyclage du chlorure d'étain(IV), on introduit par $dm^3$ de chlorure d'étain(IV) présent dans le ou les espaces de réaction 60 à 150 $Ndm^3h^{-1}$ de chlore.

6. Procédé selon l'une quelconque des revendications 1 à 5, caractérisé en ce que, lors de la réaction du chlore sur l'étain, on met en circuit fermé, sous recyclage du chlorure d'étain(IV), et par $Ndm^3h^{-1}$ de chlore introduit dans le ou les espaces de réaction, 0,12 à 0,2 $dm^3h^{-1}$ de chlorure d'étain(IV).

7. Procédé selon l'une quelconque des revendications 1 à 6, caractérisé en ce qu'on procède à la post-réaction du chlorure d'étain(IV) à 80 à 100°C.

8. Procédé selon l'une quelconque des revendications 1 à 7, caractérisé en ce que, lors de la post-réaction du chlorure d'étain(IV), on ajuste le temps de séjour à 1,5 à 3,5 h.

9. Procédé selon l'une quelconque des revendications 1 à 8, caractérisé en ce que l'on fait le plein d'étain métallique, sous la forme de morceaux solides ou de barres, en continu ou d'une manière discontinue, dans chaque espace de réaction, et aussi dans celui ou ceux servant à la post-réaction, au plus tard quand l'étain métallique ne se trouve plus que dans les $^2/_3$ de la totalité du ou des espaces de réaction remplis de chlorure d'étain(IV).

10. Procédé selon l'une quelconque des revendications 1 à 9, caractérisé en ce que chaque espace de réaction, ainsi que celui ou ceux servant à la post-réaction, contient un espace de gaz dans lequel on introduit au moins un gaz qui ne réagisse pas avec le chlore, l'étain ou le chlorure d'étain(IV) dans les conditions régnantes, de façon que la pression partielle de ce gaz soit de 60 à 99,5% de la pression totale régnant dans l'espace de gaz.

11. Procédé selon l'une quelconque des revendications 1 à 10, caractérisé en ce qu'on introduit, dans l'espace de gaz se trouvant dans le ou les espaces de réaction, de l'azote sec ou de l'air sec.

12. Procédé selon l'une quelconque des revendications 1 à 11, caractérisé en ce qu'on met le chlorure d'étain(IV), après la post-réaction, en contact avec du charbon actif.